# EUROPÄISCHE PATENTSCHRIFT

(11) **EP 3 297 062 B1**
(45) Veröffentlichungstag und Bekanntmachung des Hinweises auf die Patenterteilung: **07.11.2018**
(21) Anmeldenummer: 16189536.2
(22) Anmeldetag: 19.09.2016
(51) Int. Cl.: H01M 2/12, C25B 1/02, C25B 1/10, C25B 9/08, H01M 12/06, H01M 2/02

(54) **ELEKTROCHEMISCHE ZELLE ZUR ERZEUGUNG VON WASSERSTOFF ODER SAUERSTOFF**
ELECTROCHEMICAL CELL FOR GENERATING HYDROGEN OR OXYGEN
CELLULE ÉLECTROCHIMIQUE POUR LA GÉNÉRATION D'HYDROGÈNE ET D'OXYGÈNE

(43) Veröffentlichungstag der Anmeldung: 21.03.2018
(73) Patentinhaber: VARTA Microbattery GmbH, 73479 Ellwangen (DE)
(72) Erfinder: Kreidler, Bernd, 73479 Ellwangen (DE); Schweinstetter, Bernd, 89561 Dischingen (DE); Voigt, Uwe, 73457 Essingen (DE)
(74) Vertreter: Patentanwaltskanzlei Cartagena

(56) Entgegenhaltungen:
- EP-A1- 0 918 359
- WO-A1-2014/198450
- WO-A2-2004/023592
- DE-A1- 3 532 335
- DE-B- 1 247 431
- US-A- 5 486 429

## Beschreibung

Die vorliegende Erfindung betrifft elektrochemische Zellen zur Erzeugung von Wasserstoff oder Sauerstoff.

Elektrochemische Zellen zur Erzeugung von Wasserstoff oder Sauerstoff sind in diversen Bauformen bekannt. Insbesondere werden solche Zellen häufig als Knopfzellen konstruiert. Ein beispielhafter Aufbau solcher Zellen ist in der DE 3532335 A1 beschrieben.

Die Erzeugung von Wasserstoff und Sauerstoff basiert bei Zellen wie den in der DE 3532335 A1 beschriebenen jeweils auf einer elektrochemischen Reaktion. Beim Durchfluss eines Stroms durch eine Zelle, die als Anode ein Metall wie Zink, also eine elektrochemisch oxidierbare Substanz, und als Kathode eine zur Zersetzung von Wasser befähigte Katalysatorelektrode umfasst, kommt es zur Bildung von Wasserstoff. Beim Durchfluss eines Stroms durch eine Zelle, die als Kathode ein Metalloxid wie Mangandioxid, eine elektrochemisch reduzierbare Substanz, und als Anode eine zur Zersetzung von Wasser befähigte Katalysatorelektrode umfasst, kommt es zur Bildung von Sauerstoff. Als Elektrolyt enthalten beide Zelltypen einen wässrigen alkalischen Elektrolyten.

Während die Wasserstoffbildung bei Zellen mit Zinkanode freiwillig abläuft, wenn die Anode und die Kathode über einen Lastwiderstand miteinander verbunden werden, bedarf es bei den zur Bildung von Sauerstoff vorgesehenen Zellen einer externen elektrischen Spannung, die an die Anode und die Kathode angelegt wird.

Es gibt zahlreiche Anwendungen für Gas erzeugende Zellen wie die in der DE 3532335 A1 beschriebenen. Sehr häufig werden sie im Zusammenhang mit dem Austrag von fließfähigen Medien eingesetzt. So kann das erzeugte Gas z.B. den Kolben eines Fettspenders antreiben, wie das in der DE 3532335 A1 beschrieben ist. Aus der EP 2674623 A1 ist die Verwendung von Gas erzeugenden Zellen zum Austrag von Desinfektionsmitteln und Duftstoffen bekannt.

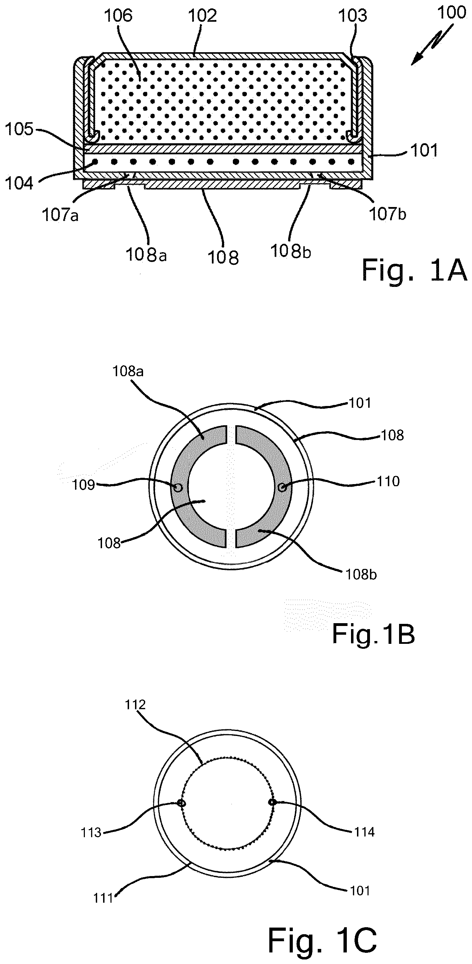

Die bekannten Gas erzeugenden Zellen umfassen stets ein Gehäuse, das als Gasaustrittsöffnung mindestens eine Durchbrechung aufweist, durch welche erzeugtes Gas aus dem Inneren des Gehäuses entweichen kann. Die Durchbrechung ist für den Betrieb der Zellen zwingend erforderlich, bei längerer Lagerung können Stoffe wie Kohlendioxid oder Luftsauerstoff ins Gehäuseinnere eindringen und dort zu unerwünschten chemischen Reaktionen führen. Aus diesem Grund ist die mindestens eine Durchbrechung in aller Regel mit einem ablösbaren Aufkleber in Form eines Etiketts mit einer kleinen Grifflasche abgedeckt. Derlei geschützte Zellen sind beispielsweise in Fig. 1 der EP 1325876 B1 dargestellt. Vor Inbetriebnahme der Zellen muss dieser ablösbare Aufkleber bei den meisten Anwendungen allerdings entfernt werden. In der Zelle erzeugter Wasserstoff oder Sauerstoff soll nämlich möglichst problemlos aus dem Gehäuseinneren austreten können. Dies ist nicht nur für den ordnungsgemäßen Betrieb der Zellen zweckmäßig sondern kann aus Sicherheitsgründen sogar erforderlich sein. Bei den aus der DE 3532335 A1 bekannten Wasserstoff erzeugenden Zellen können sich bei einer unbeabsichtigten Blockade der Gasausaustrittsöffnung Drücke bilden, die groß genug sind, um die Zellen platzen zu lassen.

Aus der US 5486429 A sind Zellen bekannt, die ein Sicherheitsventil aufweisen um Drücke, die sich anodenseitig in den Zellen aufbauen, abführen zu können. Das Sicherheitsventil kann dabei eine geschlitzte Folie, über die ein Wasserstoffüberdruck in der Zelle abgebaut werden kann, sowie eine für Gase permeable Membran, die das Eindringen von Luftfeuchtigkeit in die Zellen verhindern soll, umfassen.

Der vorliegenden Erfindung lag die Aufgabe zugrunde, elektrochemische Zellen zur Erzeugung von Wasserstoff oder Sauerstoff bereitzustellen, die zumindest einige der aus dem Stand der Technik bekannten, im Zusammenhang mit Gas erzeugenden Zellen auftretenden Probleme zu lösen.

Diese Aufgabe wird gelöst durch die elektrochemische Zelle mit den Merkmalen des Anspruchs 1. Bevorzugte Ausführungsformen der erfindungsgemäßen Zelle sind in den abhängigen Ansprüche 2 bis 5 angegeben. Der Wortlaut sämtlicher Ansprüche wird hiermit zum Inhalt der vorliegenden Beschreibung gemacht.

Die erfindungsgemäße Zelle kann sowohl zur Erzeugung von Wasserstoff (a) als auch zur Erzeugung von Sauerstoff (b) dienen. Im Fall (a) weist sie eine Anode umfassend eine elektrochemisch oxidierbare Substanz (beispielsweise Zink oder Magnesium oder eine Legierung dieser Metalle) und eine zur Wasserstoff-Erzeugung ausgebildete Elektrode als Kathode (beispielsweise eine der in der DE 3532335 A1 beschriebenen Katalysatorelektroden) auf. Im Fall (b) weist sie eine Kathode umfassend eine elektrochemisch reduzierbare Substanz (beispielsweise Zinkoxid oder Mangandioxid) und eine zur Sauerstoff-Erzeugung ausgebildeten Elektrode als Anode (beispielsweise eine der in der DE 3532335 A1 erwähnten Katalysatorelektroden) auf. Die Katalysatorelektroden sind hierbei bevorzugt als Gasdiffusionselektroden ausgebildet mit einer dünnen Aktivschicht, in die ein geeigneter Katalysator eingebettet ist. Auf den diesbezüglichen Inhalt der DE 3532335 A1 wird hiermit Bezug genommen.

Als Elektrolyt enthält die erfindungsgemäße Zelle, unabhängig vom Zelltyp, bevorzugt einen wässrigen alkalischen Elektrolyten wie Kalilauge.

Weiterhin umfasst die erfindungsgemäße Zelle ein Gehäuse, das einen Innenraum umschließt, in dem die Anode und die Kathode gemäß den Fällen (a) und (b) - voneinander getrennt durch einen Separator - angeordnet sind. Dieses Gehäuse weist eine Durchbrechung auf, durch welche an der zur Wasserstoff-Erzeugung ausgebildeten Elektrode erzeugter Wasserstoff oder an der zur Sauerstoff-Erzeugung ausgebildeten Elektrode erzeugter Sauerstoff aus dem Innenraum entweichen kann.

Die Durchbrechung in dem Gehäuse ist mittels einer elektrisch leitend ausgebildeten Folie verschlossen, die auf eine Außenseite des Gehäuses aufgeklebt ist und die die Durchbrechung sowie einen die Durchbrechung umgebenden Bereich abdeckt. Diese Folie dient dem gleichen Zweck wie der bereits erwähnte, aus dem Stand der Technik bekannte ablösbare Aufkleber in Form eines Etiketts. Im Unterschied zum Stand der Technik weist die Folie allerdings
- mindestens eine Sollrissstelle auf, die bei der ersten Inbetriebnahme der Zelle durch einen in Folge der einsetzenden Wasserstoff- oder Sauerstoff-Erzeugung im Innenraum sich bildenden Druck aufreißt
   und/oder
- sie weist in dem die Durchbrechung umgebenden Bereich mindestens einen Durchlass in Gestalt eines Loches oder eines Schlitzes auf.

Diese beiden Merkmale bewirken grundsätzlich den gleichen technischen Effekt, sie können daher alternativ zueinander oder aber in Kombination miteinander eingesetzt werden. Sowohl durch eine Folie mit der mindestens einen Sollrissstelle als auch durch eine Folie mit dem mindestens einen Durchlass in Gestalt des Loches oder Schlitzes in dem die Durchbrechung umgebenden Bereich wird die erfindungsgemäße Zelle wirksam vor ihrer Inbetriebnahme dem Eindringen von Stoffen wie Kohlendioxid oder Luftsauerstoff geschützt. Die Folie dient daher der Verbesserung der Lagerstabilität. Gleichzeitig gewährleisten die mindestens eine Sollrissstelle und der mindestens eine Durchlass in Gestalt des Loches oder Schlitzes aber auch, dass in der Zelle gebildeter Wasserstoff oder Sauerstoff aus dem Innenraum entweichen kann, ohne dass es zuvor erforderlich ist, die Folie von der Außenseite des Gehäuses abzuziehen.

Bildet sich bei der Inbetriebnahme der Zelle ein Druck im Inneren der Zelle, so führt dieser bei Anwesenheit der Folie mit der mindestens einen Sollrissstelle zu einem Aufreißen der Folie entlang mindestens einer Sollrissstelle. Bei Anwesenheit der Folie mit dem mindestens einen Durchlass kann in der Zelle gebildeter Wasserstoff oder Sauerstoff durch diesen Durchlass aus der Zelle entweichen. In der Regel führt der im Zellinneren entstehende Druck zunächst zu einem leichten Anheben der Folie bis sich Gas aus dem Zellinneren seinen Weg durch die Durchbrechung hin zu dem mindestens einen Durchlass gebahnt hat. Es ist nämlich in aller Regel bevorzugt, dass die Durchbrechung und der mindestens eine Durchlass nicht überlappen. Eine Überlappung hätte negative Auswirkungen auf die Lagerstabilität der erfindungsgemäßen Zelle. Aus diesem Grund ist der mindestens einen Durchlass in Gestalt eines Loches oder eines Schlitzes auch in dem die Durchbrechung umgebenden Bereich angeordnet.

Zum Begriff "Sollrissstelle": Im Rahmen der vorliegenden Erfindung soll hierunter eine Stelle verstanden werden, an der die Folie einer erfindungsgemäßen Zelle bevorzugt reißt, wenn die Folie einem Druck durch aus der Zelle entweichenden Wasserstoff oder Sauerstoff ausgesetzt wird. Realisiert wird die Sollrissstelle durch gezielte Materialschwächung der Folie an dieser Stelle. Beispielsweise kann die Dicke der Folie an der Stelle verringert werden. Hierzu später noch mehr.

In bevorzugten Ausführungsformen weist das Gehäuse mehr als eine Durchbrechung auf. Sofern dies der Fall ist, so ist es gemäß der vorliegenden Erfindung bevorzugt, dass jede der Durchbrechungen mit der Folie mit der mindestens eine Sollrissstelle und/oder dem mindestens einen Durchlass in Gestalt eines Loches oder eines Schlitzes abgedeckt ist.

Besonders bevorzugt weist die Zelle 2 bis 4 Durchbrechungen auf.

Bei der Durchbrechung / den Durchbrechungen handelt es sich in der Regel um einfache Löcher, die durch einen Bohr- oder einen Stanzvorgang oder mittels eines Lasers ins Gehäuse eingebracht wurden. Sie können sowohl eine runde als auch eine eckige Form haben, dies ist im Rahmen der vorliegenden Erfindung unkritisch.

Die Durchbrechung / Durchbrechungen weisen bevorzugt einen minimalen Durchmesser von nicht weniger als 0,1 mm, besonders bevorzugt von nicht weniger als 0,5 mm, vorzugsweise von nicht weniger als 1,0 mm, auf. Es ist weiterhin bevorzugt, dass die Durchbrechung / Durchbrechungen einen Durchmesser von nicht mehr als 1,5 mm, aufweisen.

Die Folie einer erfindungsgemäßen Zelle zeichnet sich in bevorzugten Ausführungsformen durch mindestens eines der folgenden Merkmale aus:
- Bevorzugt ist die Folie eine Kunststofffolie oder eine Metallfolie oder eine Kunststoff/Metall-Kompositfolie: Als Kunststofffolien und Metallfolien eignen sich grundsätzlich alle Folien, die im Wesentlichen undurchlässig für Kohlendioxid und/oder Luftsauerstoff und/oder Luftfeuchtigkeit sind, beispielsweise Folien aus Polyolefinen. Als Metallfolien eignen sich beispielsweise Kupferoder Aluminiumfolien. Bei den Kunststoff/Metall-Kompositfolien kann es sich beispielsweise um Laminate aus Kupferfolien oder Aluminiumfolien und Polyimid- oder Polyacrylfolien handeln.
- Bevorzugt umfasst die Folie eine Klebeschicht: Bei dieser kann es sich beispielsweise um eine Schicht aus einem Acrylatkleber oder aus einem Epoxidkleber handeln.
- Die elektrisch leitend ausgebildete Folie kann eine Metallfolie sein. Für bestimmte Anwendungen können aber auch die erwähnten Kunststoff/Metall-Kompositfolien verwendet werden. Die meisten Kunststofffolien lassen sich elektrisch leitfähig ausbilden, beispielsweise durch den Zusatz elektrisch leitender Partikel oder Polymerbestandteile.
- Bevorzugt weist die Folie - inclusive der Klebeschicht - eine Dicke im Bereich von 40 µm bis 2000 µm auf. Innerhalb dieses Bereiches ist ein Bereich von 50 µm bis 500 µm, insbesondere von 50 µm bis 250 µm, weiter bevorzugt. Die Klebeschicht selbst weist in der Regel eine Dicke zwischen 10 µm und 100 µm auf. Die Dicke der Folie ohne Klebeschicht beträgt bevorzugt 30 µm bis 1900 µm. Innerhalb dieses Bereiches ist eine Dicke von 40 µm bis 400 µm, insbesondere von 40 µm bis 150 µm, weiter bevorzugt.

Wie oben bereits ausgeführt, wird die Sollrissstelle bevorzugt durch gezielte Materialschwächung der Folie realisiert. In bevorzugten Ausführungsformen ist die erfindungsgemäße Zelle weiterhin durch mindestens eines der folgenden Merkmale gekennzeichnet:
- In einer bevorzugten Ausführungsform ist die mindestens eine Sollrissstelle als punkt- oder linienförmige Schwächung der Folie realisiert.
- In einer bevorzugten Ausführungsform ist die Schwächung herbeigeführt durch Perforation entlang einer Schwächungslinie. Unter Perforation entlang einer Schwächungslinie ist hierbei die linienförmige Schwächung mittels Durchlochung der Folie in vorzugsweise regelmäßigen Abständen zu verstehen.
- In einer bevorzugten Ausführungsform kann die Schwächung auch kontinuierlich und frei von Löchern entlang einer Schwächungslinie ausgeführt sein. Alternativ zur Perforation kann eine gezielte Materialschwächung entlang einer Schwächungslinie auch durch eine alternative Vorgehensweise, beispielsweise mittels eines Prägevorgangs entlang einer Linie oder durch gezielte Materialschwächung mittels thermischer oder chemischer Behandlung, beispielsweise mittels eines Lasers oder eines Ätzprozesses, herbeigeführt werden.
- In einer bevorzugten Ausführungsform ist die Sollrissstelle als linienförmige Schwächung der Folie mit bogen- oder kreisförmiger Geometrie realisiert.
- In einer bevorzugten Ausführungsform ist die Sollrissstelle als linienförmige Schwächung der Folie entlang einer oder mehrerer Geraden realisiert.
- Alternativ kann die Sollrissstelle auch als ein Schwächungsbereich realisiert werden. So ist es beispielsweise möglich, die Folie in einem Bereich dünner auszubilden als in einem anderen Bereich, so dass die Folie, wenn sie mit einem Druck beaufschlagt wird, in diesem Bereich bevorzugt reißt.

Wenn die Folie in dem die Durchbrechung umgebenden Bereich den mindestens einen Durchlass in Gestalt eines Loches oder eines Schlitzes aufweist, so ist Folgendes bevorzugt:
- Der mindestens eine Durchlass umfasst mehrere Löcher und/oder Schlitze entlang einer Linie.
- Die Linie ist entlang einer oder mehrerer Geraden oder mit bogen- oder kreisförmiger Geometrie realisiert.

Die erfindungsgemäße Zelle ist bevorzugt als Knopfzelle ausgebildet mit einem Gehäuse aus einem Zellenbecher, einem in diesen eingeschobenen Zellendeckel und einer Dichtung, die den Zellenbecher und den Zellendeckel voneinander trennt.

Meist ist bzw. sind die Durchbrechung bzw. die Durchbrechungen in den Boden des Zellenbechers oder des Zellendeckels eingebracht. Handelt es sich bei der erfindungsgemäßen Zelle um die Zelle zur Entwicklung von Wasserstoff, dann ist bzw. sind die Durchbrechung bzw. die Durchbrechungen bevorzugt in den Boden des Zellenbechers eingebracht.

Besonders bevorzugt deckt die Folie den Boden des Zellenbechers oder des Zellendeckels vollständig oder nahezu vollständig ab.

Weitere Merkmale der Erfindung sowie aus der Erfindung resultierende Vorteile ergeben sich aus den Zeichnungen sowie aus der nachfolgenden Beschreibung der Zeichnungen. Die nachfolgend beschriebenen Ausführungsformen dienen lediglich zur Erläuterung und zum besseren Verständnis der Erfindung und sind in keiner Weise einschränkend zu verstehen.

Fig. 1A zeigt schematisch den Querschnitt einer bevorzugten Ausführungsform einer erfindungsgemäßen elektrochemischen Zelle 100.

Bei der bevorzugten Ausführungsform handelt es sich um eine Knopfzelle. Dargestellt sind der Zellenbecher 101 und der darin eingeschobene Zellendeckel 102, aus denen das Gehäuse der Knopfzelle gebildet ist. Das Gehäuse weist eine zylindrische Form auf. Stirnseitig wird das Gehäuse durch die Böden des Zellenbechers 101 und des Zellendeckels 102 begrenzt, mantelseitig durch die Wand des Zellenbechers 101.

Zwischen dem Zellenbecher 101 und dem Zellendeckel 102 ist die Kunststoffdichtung 103 angeordnet, die den Zellenbecher 101 und den Zellendeckel 102 räumlich und elektrisch voneinander trennt. Die zur Wasserstofferzeugung ausgebildete Katalysatorelektrode 104 ist in der Zelle 100 in Form einer flachen Schicht enthalten. Der flächige Separator 105 liegt unmittelbar auf der Katalysatorelektrode 104 auf. Er trennt die Katalysatorelektrode 104 von der Anode 106. Diese enthält als elektrochemisch oxidierbare Substanz ein Metallpulver, nämlich Zink.

In den Boden des Zellbechers 101 sind die Durchbrechungen 107a und 107b eingearbeitet. Der Boden ist mit der Folie 108 abgeklebt. Diese deckt die Durchbrechungen 107a und 107b vollständig ab und schützt somit das Innere der Zelle 100 vor einem Eindringen etwa von Kohlendioxid oder Luftsauerstoff.

Die Folie 108 weist zwei Sollrissstellen 108a und 108b in Form von Schwächungsbereichen auf. Die Sollrissstellen 108a und 108b sind als Schwächung der Folie mit halbkreisbogenförmiger Geometrie realisiert. Die Folie 108 ist in den Schwächungsbereichen dünner als in den übrigen Bereichen. Die Sollrissstellen 108a und 108b liegen unmittelbar über den Durchbrechungen 107a und 107b. Die Dicke der Folie ist im Bereich der Sollrissstellen reduziert. Wird die Zelle 100 in Betrieb genommen und lässt man einen Strom durch sie fließen, so wird im Inneren des Gehäuses Wasserstoff gebildet. Durch den in der Folge ansteigenden Druck zerreißt die Folie 108 an mindestens einer der Sollrissstellen 108a und 108b. Danach kann der erzeugte Wasserstoff ungehindert aus der Zelle austreten. Ein Abziehen der Folie 108 vor Inbetriebnahme der Zelle 100 ist nicht erforderlich.

Fig. 1B zeigt schematisch eine Draufsicht auf den Boden des Zellenbechers 101 der in Fig. 1A dargestellten bevorzugten Ausführungsform einer erfindungsgemäßen elektrochemischen Zelle 100. Hier ist die halbkreisbogenförmige Geometrie der als Schwächungsbereiche ausgebildeten Sollrissstellen 108a und 108b gut zu erkennen.

Hervorgehoben sind die in den Schwächungsbereichen liegenden punktförmigen Bereiche 109 und 110 der Folie 108. In diesen Bereichen überlappt die Folie 108 mit den Durchbrechungen 107a und 107b.

Fig. 1C illustriert eine Draufsicht auf den Boden eines Zellenbechers 101 einer Zelle, die exakt baugleich zur in Fig. 1 dargestellten Zelle ist, abgesehen von der Folie 108. An Stelle der Folie 108 ist hier eine Folie 111 dargestellt, die als Sollrissstelle die perforierte Linie 112 aufweist. Die Folie 111 weist eine konstante Dicke im Wesentlichen über ihre gesamte Fläche auf.

Hervorgehoben sind die punktförmigen Bereiche 113 und 114 der Folie 111. In diesen Bereichen überlappt die Folie 111 mit den Durchbrechungen 107a und 107b.

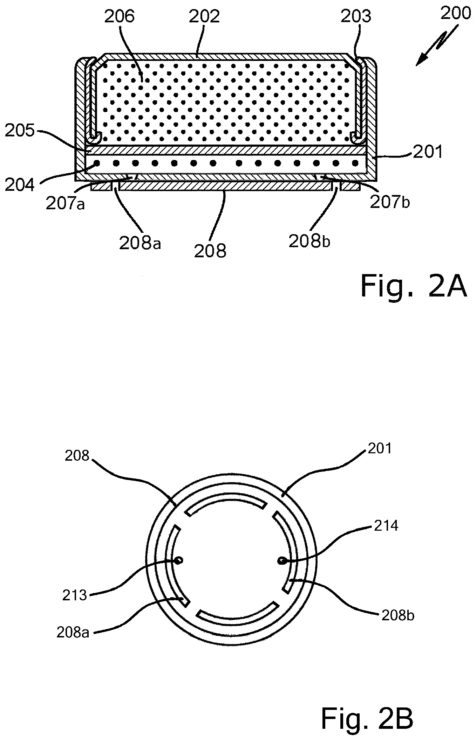

Fig. 2A zeigt schematisch den Querschnitt einer weiteren bevorzugten Ausführungsform einer erfindungsgemäßen elektrochemischen Zelle 200.

Die Zelle 200 weist den gleichen Grundaufbau auf wie die Zelle 100. Dargestellt sind der Zellenbecher 201, der darin eingeschobene Zellendeckel 202, die Kunststoffdichtung 203, die Katalysatorelektrode 204, der flächige Separator 205, die Anode 206 und die Durchbrechungen 207a und 207b. Alle diese Zellkomponenten unterscheiden sich nicht von den entsprechenden Komponenten der Zelle 100.

Unterschiede betreffen nur die auf den Boden des Zellenbechers aufgeklebte Folie, hier bezeichnet als Folie 208. Diese deckt zwar auch die Durchbrechungen 207a und 207b vollständig ab und schützt somit wie die in Fig. 1 dargestellte Folie 108 das Innere der Zelle vor einem Eindringen etwa von Kohlendioxid. An Stelle von Sollrissstellen weist sie allerdings zwei Durchlässe 208a und 208b in Gestalt eines Schlitzes auf. Die Durchlässe 208a und 208b überlappen nicht mit den Durchbrechungen 107a und 107b, sie sind in dem die Durchbrechungen 207a und 207b umgebenden Bereich positioniert.

Fig. 2B zeigt schematisch eine Draufsicht auf den Boden des Zellenbechers 200 der in Fig. 1A dargestellten bevorzugten Ausführungsform einer erfindungsgemäßen elektrochemischen Zelle 100. Hier ist zu erkennen, dass die Durchlässe 208a und 208b jeweils in Form von bogenförmig angeordneten Schlitzen ausgeführt sind.

Hervorgehoben sind die punktförmigen Bereiche 213 und 214 der Folie 208. In diesen Bereichen überlappt die Folie 208 mit den Durchbrechungen 207a und 207b.

## Patentansprüche

1. Elektrochemische Zelle (100; 200) zur Erzeugung von Wasserstoff (a) oder Sauerstoff (b), mit entweder dem Merkmal
(a) Die Zelle weist eine Anode (106; 206) umfassend eine elektrochemisch oxidierbare Substanz sowie eine zur Wasserstoff-Erzeugung ausgebildete Elektrode als Kathode (104; 204) auf
oder dem Merkmal
(b) Die Zelle weist eine Kathode umfassend eine elektrochemisch reduzierbare Substanz sowie eine zur Sauerstoff-Erzeugung ausgebildete Elektrode als Anode auf
sowie den Merkmalen
(c) Die Zelle umfasst ein Gehäuse, das einen Innenraum umschließt, in dem die Anode (106; 206) und die Kathode (104; 204) gemäß (a) oder (b) - voneinander getrennt durch einen Separator (105; 205) - angeordnet sind,
(d) Das Gehäuse weist eine Durchbrechung (107a, 107b; 207a, 207b) auf, durch welche an der zur Wasserstoff-Erzeugung ausgebildeten Elektrode (104) erzeugter Wasserstoff oder an der zur Sauerstoff-Erzeugung ausgebildeten Elektrode erzeugter Sauerstoff aus dem Innenraum entweichen kann,
und
(e) Die Durchbrechung (107a, 107b; 207a, 207b) ist mittels einer Folie (108; 208; 111) verschlossen, die auf eine Außenseite des Gehäuses aufgeklebt ist und die die Durchbrechung sowie einen die Durchbrechung umgebenden Bereich abdeckt,
**dadurch gekennzeichnet, dass**
(f) Die Folie (108; 111) mindestens eine Sollrissstelle (108a, 108b; 112) aufweist, die bei der ersten Inbetriebnahme der Zelle (100; 200) durch einen in Folge der einsetzenden Wasserstoff- oder Sauerstoff-Erzeugung im Innenraum sich bildenden Druck aufreißt,
und
(g) die Folie (108; 208) in dem die Durchbrechung (107a, 107b; 207a, 207b) umgebenden Bereich mindestens einen Durchlass (208a; 208b) in Gestalt eines Loches oder eines Schlitzes aufweist,
und
(h) die Folie (108; 208; 111) elektrisch leitend ausgebildet ist.

2. Zelle nach Anspruch 1 mit mindestens einem der folgenden zusätzlichen Merkmale:
(a) Die Folie (108; 208; 111) ist eine Kunststofffolie oder eine Metallfolie oder eine Kunststoff/Metall-Kompositfolie.
(b) Die Folie (108; 208; 111) umfasst eine Klebeschicht.
(c) Die Folie (108; 208; 111) weist inclusive der Klebeschicht eine Dicke im Bereich von 40 µm bis 2000 µm auf.

3. Zelle nach Anspruch 1 oder Anspruch 2 mit mindestens einem der folgenden zusätzlichen Merkmale:
(a) Die mindestens eine Sollrissstelle (112) ist als punkt- oder linienförmige Schwächung der Folie realisiert.
(b) Die Schwächung ist herbeigeführt durch Perforation entlang einer Schwächungslinie (112).
(c) Die Schwächung ist kontinuierlich und frei von Löchern entlang einer Schwächungslinie ausgeführt.
(d) Die Sollrissstelle (112) ist als linienförmige Schwächung der Folie mit bogen- oder kreisförmiger Geometrie realisiert.
(e) Die Sollrissstelle ist als linienförmige Schwächung der Folie entlang einer oder mehrerer Geraden realisiert.

4. Zelle nach einem der vorhergehenden Ansprüche mit mindestens einem der folgenden zusätzlichen Merkmale:
(a) Der mindestens eine Durchlass (208a, 208b) umfasst mehrere Löcher und/oder Schlitze entlang einer Linie.
(b) Die Linie ist entlang einer oder mehrerer Geraden oder mit bogen- oder kreisförmiger Geometrie realisiert.

5. Zelle nach einem der vorhergehenden Ansprüche mit mindestens einem der folgenden zusätzlichen Merkmale:
(a) Die Zelle ist als Knopfzelle ausgebildet und umfasst ein Gehäuse aus einem Zellenbecher (101; 201), einem in diesen eingeschobenen Zellendeckel (102; 202) und einer Dichtung (103; 203), die den Zellenbecher (101; 201) und den Zellendeckel (102; 202) voneinander trennt.
(b) Die Durchbrechung ist in den Boden des Zellenbechers (101; 201) oder des Zellendeckels (102; 202) eingebracht.
(c) Die Folie (108; 208; 111) deckt den Boden des Zellenbechers (101; 201) oder des Zellendeckels (102; 202) ab.

## Claims

1. Electrochemical cell (100; 200) for generating hydrogen (a) or oxygen (b), having either the feature
(a) the cell has an anode (106; 206) comprising an electrochemically oxidizable substance and an electrode that is configured for hydrogen generation as a cathode (104; 204)
or the feature
(b) the cell has a cathode comprising an electrochemically reducible substance and an electrode that is configured for oxygen generation as an anode
and the features
(c) the cell comprises a housing, which encloses an interior in which the anode (106; 206) and the cathode (104; 204) according to (a) or (b) are arranged - separated from one another by a separator (105; 205),
(d) the housing has an aperture (107a, 107b; 207a, 207b) through which hydrogen generated at the electrode (104) that is configured for hydrogen generation or oxygen generated at the electrode that is configured for oxygen generation can escape from the interior,
and
(e) the aperture (107a, 107b; 207a, 207b) is closed by means of a film (108; 208; 111), which is affixed to an outer side of the housing and which covers the aperture and an area surrounding the aperture,
**characterized in that**
(f) the film (108; 111) has at least one predetermined rupture location (108a, 108b; 112), which ruptures during the initial start-up of the cell (100; 200) due to a pressure that forms in the interior as a result of the hydrogen or oxygen generation that occurs,
and
(g) the film (108; 208) has at least one opening (208a; 208b) in the design of a hole or of a slot in the area that surrounds the aperture (107a, 107b; 207a, 207b),
and
(h) the film (108; 208; 111) is electrically conductive.

2. Cell according to Claim 1 having at least one of the following additional features:
(a) the film (108; 208; 111) is a plastic film or a metal film or a plastic/metal composite film.
(b) the film (108; 208; 111) comprises an adhesive layer.
(c) the film (108; 208; 111) has a thickness in the range of from 40 µm to 2000 µm, including the adhesive layer.

3. Cell according to Claim 1 or Claim 2 having at least one of the following additional features:
(a) the at least one predetermined rupture location (112) is realized as a punctiform or linear weakening of the film.
(b) the weakening is caused by perforation along a weakening line (112).
(c) the weakening is embodied to be continuous and free from holes along a weakening line.
(d) the predetermined rupture location (112) is realized as a linear weakening of the film having an arched or circular geometry.
(e) the predetermined rupture location is realized as a linear weakening of the film along one or more straight lines.

4. Cell according to one of the preceding claims having at least one of the following additional features:
(a) the at least one opening (208a, 208b) comprises a plurality of holes and/or slots along a line.
(b) the line is realized along one or more straight lines or having an arched or circular geometry.

5. Cell according to one of the preceding claims having at least one of the following additional features:
(a) the cell is configured as a button cell and comprises a housing composed of a cell cup (101; 201), a cell top (102; 202) inserted therein and a seal (103; 203), which separates the cell cup (101; 201) and the cell top (102; 202) from one another.
(b) the aperture is incorporated into the base of the cell cup (101; 201) or of the cell top (102; 202).
(c) the film (108; 208; 111) covers the base of the cell cup (101; 201) or of the cell top (102; 202).

## Revendications

1. Cellule électrochimique (100 ; 200) destinée à produire de l'hydrogène (a) ou de l'oxygène (b), ayant soit la caractéristique
(a) la cellule possède une anode (106 ; 206) comprenant une substance oxydable par action électrochimique ainsi qu'une électrode faisant office de cathode (104 ; 204) configurée pour la production d'hydrogène
soit la caractéristique
(b) la cellule possède une cathode comprenant une substance oxydable par action électrochimique ainsi qu'une électrode faisant office d'anode configurée pour la production d'oxygène
ainsi que les caractéristiques
(c) la cellule comprend un boîtier qui entoure en espace intérieur dans lequel sont disposées l'anode (106 ; 206) et la cathode (104 ; 204) selon (a) ou (b) - séparées l'une de l'autre par un séparateur (105 ; 205),
(d) le boîtier possède une percée (107a, 107b ; 207a, 207b) à travers laquelle peut s'échapper l'hydrogène produit au niveau de l'électrode (104) configurée pour la production d'hydrogène ou l'oxygène produit au niveau de l'électrode configurée pour la production d'oxygène,
et
(e) la percée (107a, 107b ; 207a, 207b) est fermée au moyen d'un film (108 ; 208 ; 111) qui est collé sur un côté extérieur du boîtier et qui recouvre la percée ainsi qu'une zone qui entoure la percée,
**caractérisée en ce que**
(f) le film (108 ; 111) possède au moins un point de déchirure voulue (108a, 108b ; 112) qui, lors de la première mise en service de la cellule (100 ; 200), se déchire sous l'effet d'une pression qui se forme à l'intérieur de l'espace intérieur en conséquence de la production d'hydrogène ou d'oxygène qui s'établit,
et
(g) le film (108 ; 208) possède, dans la zone qui entoure la percée (107a, 107b ; 207a, 207b), au moins un passage (208a ; 208b) sous la forme d'un trou ou d'une fente,
et
(g) le film (108 ; 208 ; 111) est réalisé électriquement conducteur.

2. Cellule selon la revendication 1, comprenant au moins l'une des caractéristiques supplémentaires suivantes :
(a) le film (108 ; 208 ; 111) est un film en matière plastique ou un film métallique ou un film composite plastique/métal,
(b) le film (108 ; 208 ; 111) comprend une couche d'adhésif,
(c) le film (108 ; 208 ; 111), y compris la couche d'adhésif, présente une épaisseur dans la plage de 40 µm à 2000 µm.

3. Cellule selon la revendication 1 ou 2, comprenant au moins l'une des caractéristiques supplémentaires suivantes :
(a) l'au moins un point de déchirure voulue (112) est réalisé sous la forme d'un affaiblissement ponctuel ou en forme de ligne du film,
(b) l'affaiblissement est produit par perforation le long d'une ligne d'affaiblissement (112),
(c) l'affaiblissement est réalisé continu et dépourvu de trous le long d'une ligne d'affaiblissement,
(d) le point de déchirure voulue (112) est réalisé sous la forme d'un affaiblissement en forme de ligne du film avec une géométrie en forme d'arc ou de cercle,
(e) le point de déchirure voulue est réalisé sous la forme d'un affaiblissement en forme de ligne du film le long d'une ou plusieurs droites.

4. Cellule selon une ou plusieurs des revendications précédentes, comprenant au moins l'une des caractéristiques supplémentaires suivantes :
(a) l'au moins un passage (208a, 208b) comporte plusieurs trous et/ou fentes le long d'une ligne,
(b) la ligne est réalisée le long d'une ou plusieurs droites avec une géométrie en forme d'arc ou de cercle.

5. Cellule selon une ou plusieurs des revendications précédentes, comprenant au moins l'une des caractéristiques supplémentaires suivantes :
(a) la cellule est réalisée sous la forme d'une pile bouton et comporte un boîtier constitué d'un godet de cellule (101 ; 201), d'un couvercle de cellule (102 ; 202) inséré dans celui-ci et d'une garniture d'étanchéité (103 ; 203) qui sépare le godet de cellule (101 ; 201) et le couvercle de cellule (102 ; 202) l'un de l'autre,
(b) la percée est pratiquée dans le fond du godet de cellule (101 ; 201) ou du couvercle de cellule (102 ; 202),
(c) le film (108 ; 208 ; 111) recouvre le fond du godet de cellule (101 ; 201) ou du couvercle de cellule (102 ; 202) .
